# FASCICULE DE BREVET EUROPEEN

(11) **EP 3 256 948 B1**
(45) Date de publication et mention de la délivrance du brevet: **08.04.2020**
(21) Numéro de dépôt: 16707179.4
(22) Date de dépôt: 04.02.2016
(51) Int. Cl.: G06F 12/1081

(54) **PROCÉDÉ D'EXÉCUTION D'UNE REQUÊTE D'ÉCHANGE DE DONNÉES ENTRE DES PREMIER ET DEUXIÈME ESPACES D'ADRESSAGE PHYSIQUES DISJOINTS DE CIRCUITS SUR CARTE OU PUCE**
VERFAHREN ZUR AUSFÜHRUNG EINER ANFRAGE ZUM AUSTAUSCH VON DATEN ZWISCHEN ERSTEN UND ZWEITEN DISJUNKTEN PHYSIKALISCHEN ADRESSIERUNGSRAUM VON CHIP- ODER KARTENSCHALTUNGEN
METHOD OF EXECUTING A REQUEST TO EXCHANGE DATA BETWEEN FIRST AND SECOND DISJOINT PHYSICAL ADDRESSING SPACES OF CHIP OR CARD CIRCUITS

(30) Priorité: 09.02.2015 FR 1551012
(43) Date de publication de la demande: 20.12.2017
(73) Titulaire: Commissariat à l'énergie atomique et aux énergies alternatives, 75015 Paris (FR)
(72) Inventeur: GAUGUEY, Rémy, 38410 Saint Martin d'Uriage (FR); DUTOIT, Denis, 38120 Fontanil-Cornillon (FR); GUTHMULLER, Eric, 38300 Ruy (FR); MARTIN, Jérôme, 38240 Meylan (FR)
(74) Mandataire: Bonnet, Michel
(86) Numéro de dépôt international: PCT/FR2016/050236
(87) Numéro de publication internationale: WO 2016/128649

(56) Documents cités:
- US-A1- 2006 059 328

## Description

La présente invention concerne un procédé d'exécution d'une requête d'échange de données entre des premier et deuxième espaces d'adressage physiques disjoints contrôlés respectivement par des premier et deuxième circuits sur carte ou puce distincts.

D'une façon générale, les deux circuits peuvent être montés sur des cartes ou puces différentes, sur une même carte ou sur une même puce, voire dans un même boîtier grâce à l'utilisation de technologies d'intégration de types SiP (de l'anglais « Silicon in Package ») ou 3D.

D'une façon générale également, les deux circuits sont interconnectés par des liens de communication rapides permettant à chacun d'accéder à l'espace d'adressage physique contrôlé par l'autre. Ces liens peuvent prendre la forme d'une matrice d'interconnexion d'un réseau sur puce (de l'anglais « Network on Chip »), d'un bus de transmission, d'une connexion à haut débit de type Fibre Channel et à topologie point-à-point, en anneau ou commutée, etc.

Le contexte technologique dans lequel est amenée à s'exécuter une telle requête d'échange de données concerne principalement les architectures multiprocesseurs à noeuds de calculs interconnectés et les techniques de groupement de calculateurs en grappes de serveurs permettant de répondre à des besoins de plus en plus importants en puissance de calcul. Il est ainsi possible de concevoir des calculateurs de type HPC (de l'anglais « High Performance Computing ») pouvant intégrer jusqu'à dix mille microprocesseurs élémentaires à fréquences d'horloge très élevées et faible consommation, interconnectés entre eux par des liens à très hauts débits. Dans ces architectures, qualifiées de « scale-out », la mémoire est distribuée entre les processeurs en une pluralité de mémoires locales de grande capacité et des données peuvent devoir être échangées en permanence à haut débit d'une mémoire locale à l'autre en fonction de traitements distribués sur plusieurs processeurs travaillant en parallèle. Dans ces architectures également, les circuits munis de processeurs sont généralement en outre équipés de supports matériels pour la virtualisation de leurs systèmes d'exploitation avec des mécanismes d'accélération de cette virtualisation, pour le contrôle d'accès direct en mémoire à canaux multiples à l'aide du modèle de programmation RDMA (de l'anglais « Remote Direct Memory Access ») et pour la traduction d'adresses virtuelles en adresses physiques.

L'objectif peut être d'atteindre un maximum de Giga Flops (de l'anglais « Floating-point Opérations Per Second ») en sollicitant un maximum de calculateurs et d'interconnexion en même temps.

L'objectif peut aussi être de répondre à une exigence de proportionnalité énergétique requise par les charges de calcul produites par les applications de la famille des traitements informatiques en nuage (de l'anglais « cloud computing ») dont la variabilité est une caractéristique majeure. Ces applications étant largement distribuées, très gourmandes en mémoire et en entrées/sorties, mais finalement assez peu en calcul proprement dit, les architectures « scale-out », plus efficaces énergétiquement, sont mieux adaptées à ces nouvelles familles d'applications.

Dans ce contexte, l'invention s'applique plus particulièrement à un procédé d'exécution d'une requête d'échange de données comportant les étapes suivantes :
- création d'un canal de communication entre :
   - un premier port d'accès du premier circuit, obtenu par un premier processus logiciel s'exécutant dans le premier circuit qui comporte au moins un processeur d'exécution de ce premier processus logiciel dans le premier espace d'adressage physique, et
   - un deuxième port d'accès du deuxième circuit, obtenu par un deuxième processus logiciel s'exécutant dans le deuxième circuit qui comporte au moins un processeur d'exécution de ce deuxième processus logiciel dans le deuxième espace d'adressage physique,
- émission, par le premier processus logiciel, de ladite requête d'échange de données, cette requête désignant une adresse virtuelle dans un espace d'adressage virtuel du deuxième processus logiciel, et
- exécution, par des gestionnaires des premier et deuxième ports d'accès, de la requête d'échange de données entre les espaces d'adressage physiques disjoints des deux processus logiciels, sans sollicitation du processeur exécutant le deuxième processus logiciel.

Pour éviter de solliciter les processeurs des circuits, et en particulier celui du deuxième circuit, un tel procédé est généralement mis en oeuvre à l'aide d'adaptateurs réseaux onéreux et peu efficaces énergétiquement, par exemple selon le protocole RoCE (de l'anglais « RDMA over Converged Ethernet ») en technologie 10 Gigabit Ethernet utilisée pour implémenter le standard IEEE 802.3 à des débits compris entre 1 000 et 10 000 Mbits/s, selon la technologie Infiniband, ou encore selon d'autres technologies et protocoles. Le document US2006/059328 A1 décrit un système de traitement de données pour transférer des données à l'aide d'un adaptateur à canal unique, partagé entre plusieurs systèmes d'exploitation. Un exemple de mise en œuvre concrète via le standard MPI (de l'anglais « Message Passing Interface ») en programmation RDMA sur Infiniband est par exemple décrit dans l'article de Liu et al, intitulé « High performance RDMA-based MPI implementation over Infiniband », publié dans International Journal of Parallel Programming, Special issue I: The 17th Annual International Conférence on Supercomputing (ICS'03), volume 32, n°3, pages 167-198, juin 2004. Un autre exemple mettant en oeuvre des adaptateurs PCI Express et le protocole PCI-SIG est divulgué dans la demande de brevet européen EP 2 680 155 A1. Il convient de noter que, quels que soient les adaptateurs requis, ils sont en outre susceptibles d'ajouter de la latence dans les échanges de données.

Il peut ainsi être souhaité de prévoir un procédé d'exécution d'une requête d'échange de données qui permette de s'affranchir d'au moins une partie des problèmes et contraintes précités.

Il est donc proposé un procédé d'exécution d'une requête d'échange de données entre des premier et deuxième espaces d'adressage physiques disjoints contrôlés respectivement par des premier et deuxième circuits sur carte ou puce distincts, comportant les étapes suivantes :
- création d'un canal de communication entre :
   - un premier port d'accès du premier circuit, obtenu par un premier processus logiciel s'exécutant dans le premier circuit qui comporte au moins un processeur d'exécution de ce premier processus logiciel dans le premier espace d'adressage physique, et
   - un deuxième port d'accès du deuxième circuit, obtenu par un deuxième processus logiciel s'exécutant dans le deuxième circuit qui comporte au moins un processeur d'exécution de ce deuxième processus logiciel dans le deuxième espace d'adressage physique,
- émission, par le premier processus logiciel, de ladite requête d'échange de données, cette requête désignant une adresse virtuelle dans un espace d'adressage virtuel du deuxième processus logiciel, et
- exécution, par des gestionnaires des premier et deuxième ports d'accès, de la requête d'échange de données entre les espaces d'adressage physiques disjoints des deux processus logiciels, sans sollicitation du processeur exécutant le deuxième processus logiciel.
selon lequel :
- lors de la création du canal de communication, une traduction de l'espace d'adressage virtuel du deuxième processus logiciel vers son espace d'adressage physique est créée et associée à ce canal de communication dans le deuxième circuit, et
- lors de l'exécution de la requête, des données d'identification du canal de communication sont ajoutées à l'adresse virtuelle désignée dans la requête.

Ainsi, par une astuce peu onéreuse et sans surcoût énergétique sensible, i.e. l'ajout de quelques bits à l'adresse virtuelle désignée dans la requête pour y insérer des données d'identification du canal de communication, on permet d'exécuter du côté du deuxième circuit une traduction aisée et rapide de cette adresse virtuelle en adresse physique de l'espace d'adressage physique contrôlé par le deuxième circuit, sans sollicitation de son processeur et sans aucun besoin en adaptation réseau.

De façon optionnelle, la traduction de l'espace d'adressage virtuel du deuxième processus logiciel vers son espace d'adressage physique est exploitée par une unité de gestion mémoire du deuxième circuit pour déterminer quelle adresse physique du deuxième espace d'adressage physique correspond à l'adresse virtuelle désignée dans la requête à partir des données d'identification du canal de communication ajoutées à cette adresse virtuelle.

De façon optionnelle également, les données d'identification du canal de communication ajoutées à l'adresse virtuelle désignée dans la requête comportent un identifiant du deuxième circuit, d'un système d'exploitation sur lequel s'exécute le deuxième processus logiciel et du deuxième port d'accès obtenu par le deuxième processus logiciel, et un identifiant d'une mémoire tampon d'échange définie du côté du deuxième circuit.

De façon optionnelle également, les données d'identification du canal de communication sont ajoutées à l'adresse virtuelle désignée dans la requête par le gestionnaire du premier port d'accès du premier circuit.

De façon optionnelle également, l'ajout des données d'identification du canal de communication à l'adresse virtuelle désignée dans la requête se fait par encapsulation de cette adresse virtuelle dans une adresse de transport, cette adresse de transport étant transmise puis traitée par le gestionnaire du deuxième port d'accès comme une adresse virtuelle à traduire.

De façon optionnelle également, l'exécution de la requête est gérée par une communication directe établie entre le processeur du premier circuit et une mémoire locale du deuxième circuit.

Dans ce cas, de façon optionnelle :
- la traduction de l'espace d'adressage virtuel du premier processus logiciel vers son espace d'adressage physique est exploitée par une unité de gestion mémoire du processeur du premier circuit, et
- cette unité de gestion mémoire exploite en outre la traduction de l'espace d'adressage virtuel du deuxième processus logiciel vers un espace d'adressage physique temporaire utilisé pour indexer une table de correspondance dans laquelle sont conservées les données d'identification du canal de communication.

De façon optionnelle également, l'exécution de la requête est gérée par une communication indirecte établie entre le processeur du premier circuit et une mémoire locale du deuxième circuit avec la sollicitation d'un contrôleur d'accès direct en mémoire pour des accès en écriture et en lecture, en mémoire locale ou à distance, indépendants du processeur du premier circuit.

Dans ce cas, de façon optionnelle :
- la traduction de l'espace d'adressage virtuel du premier processus logiciel vers son espace d'adressage physique est exploitée par une unité de gestion mémoire associée spécifiquement au contrôleur d'accès direct en mémoire, et
- cette unité de gestion mémoire exploite en outre la traduction de l'espace d'adressage virtuel du deuxième processus logiciel vers un espace d'adressage physique temporaire utilisé pour indexer une table de correspondance dans laquelle sont conservées les données d'identification du canal de communication.

De façon optionnelle également, la requête d'échange de données émise par le premier processus logiciel concerne :
- une lecture de données stockées dans le premier espace d'adressage physique dans lequel s'exécute le premier processus logiciel et une écriture de ces données dans le deuxième espace d'adressage physique dans lequel s'exécute le deuxième processus logiciel, ou
- une lecture de données stockées dans le deuxième espace d'adressage physique dans lequel s'exécute le deuxième processus logiciel et une écriture de ces données dans le premier espace d'adressage physique dans lequel s'exécute le premier processus logiciel.

De façon optionnelle également, au moins l'un des premier et deuxième processus logiciels s'exécute sur une machine virtuelle exécutée elle-même par un hyperviseur du processeur correspondant, chaque traduction d'adresse virtuelle en adresse physique locale correspondante comportant une traduction d'adresse virtuelle en adresse physique intermédiaire vue par la machine virtuelle et une traduction d'adresse physique intermédiaire en adresse physique vue par l'hyperviseur.

L'invention sera mieux comprise à l'aide de la description qui va suivre, donnée uniquement à titre d'exemple et faite en se référant aux dessins annexés dans lesquels :
- la figure 1 représente schématiquement la structure générale d'un système sur carte ou sur puce adapté pour la mise en oeuvre d'un procédé d'exécution d'une requête d'échange de données selon l'invention,
- les figures 2A et 2B illustrent les étapes successives d'un procédé de d'exécution d'une requête d'échange de données entre deux circuits du système de la figure 1 ainsi que les trajets en écriture/lecture correspondants, selon un premier mode de réalisation de l'invention, et
- les figures 3A et 3B illustrent les étapes successives d'un procédé de d'exécution d'une requête d'échange de données entre deux circuits du système de la figure 1 ainsi que les trajets en écriture/lecture correspondants, selon d'autres modes de réalisation de l'invention.

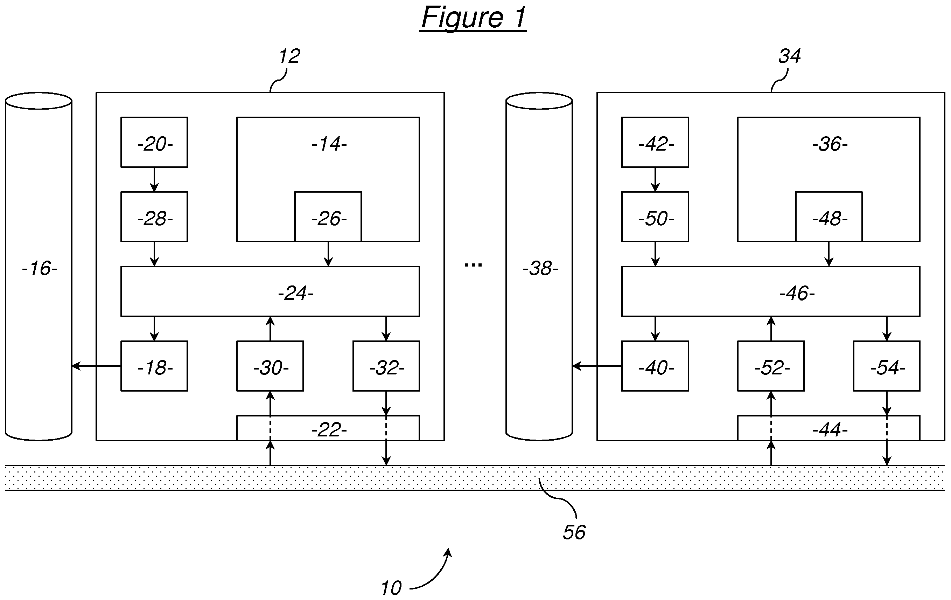

Le système 10, sur carte ou sur puce, représenté schématiquement sur la figure 1, comporte une pluralité de circuits dont deux seulement sont illustrés.

Un premier circuit 12 comporte un processeur principal 14, de type mono- ou multi- processeur, mono- ou multi-cœur. Il est par ailleurs associé à une mémoire locale 16 et comporte, pour y accéder en lecture ou en écriture, un contrôleur de mémoire 18. Il comporte en outre un coprocesseur 20 d'accès direct en mémoire, plus précisément un contrôleur DMA (de l'anglais « Direct Memory Access »). L'accès direct en mémoire est un procédé informatique bien connu selon lequel des données provenant de ou destinées à être transmises vers un périphérique, par exemple un autre circuit du système 10, sont transférées directement par le contrôleur DMA 20 vers ou depuis la mémoire locale 16, sans intervention du processeur principal 14 sauf pour lancer et conclure le transfert. Le premier circuit 12 présente en outre une interface 22 de connexion au reste du système 10. Le processeur principal 14, le contrôleur de mémoire 18, le contrôleur DMA 20 et l'interface 22 sont interconnectés dans le premier circuit 12 à l'aide d'un réseau interne d'interconnexion 24.

Le processeur principal 14 est destiné à exécuter des instructions de processus logiciels dans des espaces d'adressage physiques qui leur sont réservés en mémoire locale 16. Il peut le faire par l'intermédiaire d'un système d'exploitation qui lui est propre ou par l'intermédiaire d'un ou plusieurs systèmes d'exploitation invités, qualifiés de « machines virtuelles », exécutés eux-mêmes par un hyperviseur ou VMM (de l'anglais « Virtual Machine Monitor »). Dans tous les cas, les adresses de mémoire identifiées dans les instructions des processus logiciels sont virtuelles et nécessitent d'être traduites en adresses physiques dans les espaces d'adressage physiques correspondants pour la bonne exécution de ces instructions. C'est pourquoi le processeur principal 14 comporte une unité de gestion mémoire 26, appelée MMU (de l'anglais « Memory Management Unit »), dont la fonction est de réaliser ces traductions d'adresses virtuelles en adresses physiques pour chaque processus logiciel. Lorsqu'un processus logiciel s'exécute directement sur le système d'exploitation du processeur principal 14, un seul niveau de traduction d'adresse virtuelle en adresse physique est réalisé par la MMU 26. En revanche, lorsqu'un processus logiciel s'exécute sur une machine virtuelle du processeur principal 14, deux niveaux de traduction d'adresse virtuelle en adresse physique intermédiaire (celle vue par la machine virtuelle), puis d'adresse physique intermédiaire en adresse physique (celle vue par l'hyperviseur), sont réalisés par la MMU 26.

En ce qui concerne le contrôleur DMA 20 dont les accès en lecture ou écriture à la mémoire locale 16 sont indépendants du processeur principal 14, il gère lui aussi des adresses virtuelles d'instructions de processus, de sorte qu'il a lui aussi besoin d'une unité de gestion mémoire 28 indépendante de la MMU 26. Cette unité de gestion mémoire 28 spécifique au contrôleur DMA 20 est généralement appelée IOMMU (de l'anglais « Input/Output Memory Management Unit ») parce qu'elle concerne des entrées/sorties du premier circuit 12. Elle est à un ou deux niveaux de traduction.

Par ailleurs, comme on le verra par la suite pour la mise en oeuvre d'un échange de données selon l'invention, le premier circuit 12 comporte une unité de gestion mémoire supplémentaire 30, indépendante de la MMU 26 et de la IOMMU 28, pour traduire en adresses physiques de la mémoire locale 16, des adresses virtuelles incluses dans des requêtes d'échange de données reçues par le premier circuit 12 via l'interface 22. Cette unité de gestion mémoire supplémentaire 30 est aussi généralement appelée IOMMU parce qu'elle concerne aussi des entrées/sorties du premier circuit 12. Elle est aussi à un ou deux niveaux de traduction.

Enfin, comme on le verra également par la suite pour la mise en oeuvre d'un échange de données selon l'invention, le premier circuit 12 comporte des moyens de mise en correspondance d'adresses virtuelles avec des données d'identification de canaux de communication établis entre des processus logiciels du premier circuit 12 et des processus logiciels d'autres circuits. Ces moyens prennent par exemple la forme d'une table de correspondance 32, généralement appelée LUT (de l'anglais « Look-Up Table »), utilisée pour ajouter des données d'identification de canaux de communication dans des requêtes d'échange de données émises par le premier circuit 12 via l'interface 22.

Un deuxième circuit 34 illustré sur la figure 1 est identique au premier circuit 12. Il comporte un processeur principal 36, est associé à une mémoire locale 38 et comporte, pour y accéder en lecture ou en écriture, un contrôleur de mémoire 40. Il comporte en outre un contrôleur DMA 42 et une interface 44 de connexion au reste du système 10. Le processeur principal 36, le contrôleur de mémoire 40, le contrôleur DMA 42 et l'interface 44 sont interconnectés dans le deuxième circuit 34 à l'aide d'un réseau interne d'interconnexion 46.

Le processeur principal 36 comporte une MMU 48 dont la fonction est de réaliser des traductions d'adresses virtuelles en adresses physiques pour chaque processus logiciel qu'il exécute. Comme pour le premier circuit 12, lorsqu'un processus logiciel s'exécute directement sur le système d'exploitation du processeur principal 36, un seul niveau de traduction d'adresse virtuelle en adresse physique est réalisé par la MMU 48. En revanche, lorsqu'un processus logiciel s'exécute sur une machine virtuelle du processeur principal 36, deux niveaux de traduction d'adresse virtuelle en adresse physique intermédiaire (celle vue par la machine virtuelle), puis d'adresse physique intermédiaire en adresse physique (celle vue par l'hyperviseur), sont réalisés par la MMU 48.

En ce qui concerne le contrôleur DMA 42 dont les accès en lecture ou écriture à la mémoire locale 38 sont indépendants du processeur principal 36, il gère lui aussi des adresses virtuelles d'instructions de processus, de sorte qu'il est associé à une IOMMU 50 à un ou deux niveaux de traduction.

Par ailleurs, par symétrie avec le premier circuit 12, le deuxième circuit 34 comporte une IOMMU supplémentaire 52 à un ou deux niveaux de traduction, indépendante de la MMU 48 et de la IOMMU 50, pour traduire en adresses physiques de la mémoire locale 38, des adresses virtuelles incluses dans des requêtes d'échange de données reçues par le deuxième circuit 34 via l'interface 44.

Enfin, également par symétrie avec le premier circuit 12, le deuxième circuit 34 comporte des moyens de mise en correspondance d'adresses virtuelles avec des données d'identification de canaux de communication établis entre des processus logiciels du deuxième circuit 34 et des processus logiciels d'autres circuits. Ces moyens prennent par exemple la forme d'une LUT 54, utilisée pour ajouter des données d'identification de canaux de communication dans des requêtes d'échange de données émises par le deuxième circuit 34 via l'interface 44.

Les premier et deuxième circuits 12 et 34 sont reliés l'un à l'autre à l'aide d'une interconnexion 56 qui peut prendre la forme d'une matrice d'interconnexion d'un réseau sur puce, d'un bus de transmission, d'une connexion à haut débit de type Fibre Channel et à topologie point-à-point, en anneau ou commutée, etc.

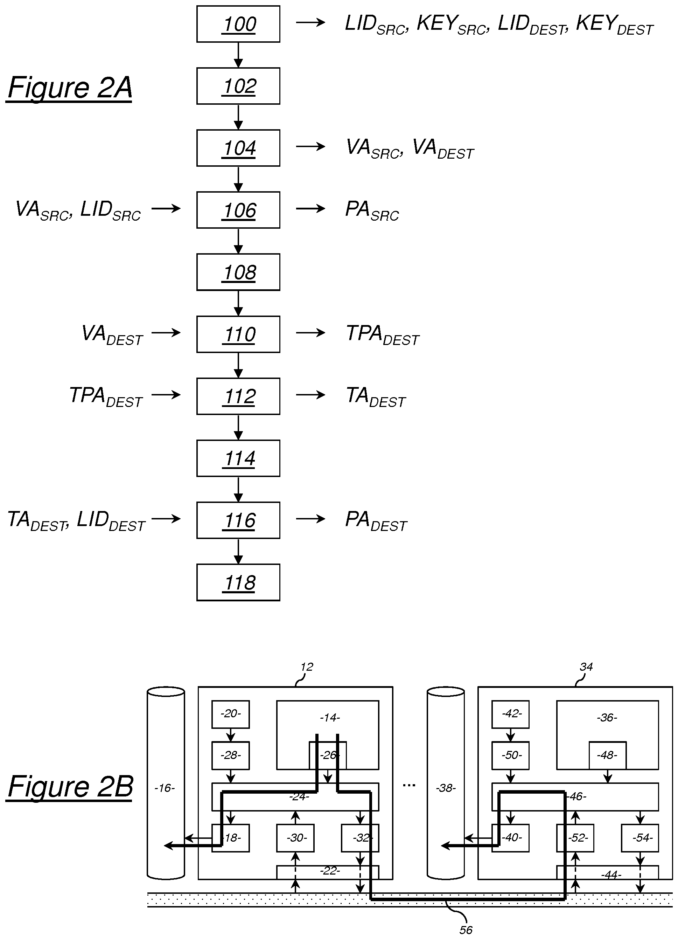

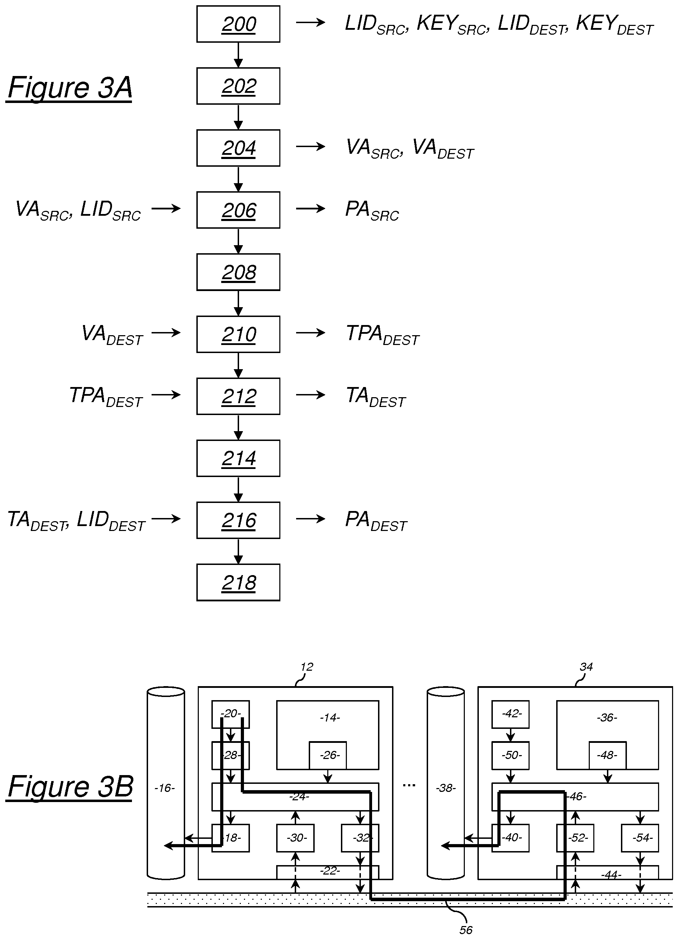

Un procédé d'exécution d'une requête d'échange de données entre des espaces d'adressage physiques disjoints contrôlés respectivement par les premier et deuxième circuits 12 et 34 va maintenant être détaillé en référence aux figures 2A, 2B et 3A, 3B selon différents modes de réalisation possibles. Dans ces figures et à titre d'exemple non limitatif, la requête est émise par un premier processus logiciel s'exécutant dans le premier circuit 12, un premier espace d'adressage physique étant alloué à ce premier processus logiciel dans la mémoire locale 16 par le processeur principal 14. Elle concerne un échange de données avec un deuxième espace d'adressage physique, disjoint du premier, alloué dans la mémoire locale 38 par le processeur principal 36 à un deuxième processus logiciel s'exécutant dans le deuxième circuit 34.

Conformément à un premier mode de réalisation de l'invention, la figure 2A illustre la mise en oeuvre d'un tel procédé dans le contexte suivant :
- une communication directe, c'est-à-dire sans sollicitation du contrôleur DMA 20 et de sa IOMMU 28, peut être établie entre le processeur principal 14 du premier circuit 12 et la mémoire locale 38 du deuxième circuit 34,
- les adresses virtuelles sont codées sur 64 bits et les adresses physiques sur 48 bits,
- le premier processus logiciel émetteur de la requête d'échange de données s'exécute directement sur le système d'exploitation du processeur principal 14, et
- l'échange de données requis est une écriture à distance, c'est-à-dire une lecture de données stockées dans le premier espace d'adressage physique de la mémoire 16 dans lequel s'exécute le premier processus logiciel et une écriture de ces données dans le deuxième espace d'adressage physique de la mémoire 38 dans lequel s'exécute le deuxième processus logiciel.

Dans ce mode de réalisation, la présence du contrôleur DMA 20 et de sa IOMMU 28 n'est pas nécessaire. Par symétrie, la présence du contrôleur DMA 42 et de sa IOMMU 50 n'est pas nécessaire non plus.

Au cours d'une première étape de négociation 100 d'une phase de création de canal de communication, un canal de communication est négocié entre un premier port d'accès du premier circuit 12, obtenu par le premier processus logiciel s'exécutant dans le premier circuit 12, et un deuxième port d'accès du deuxième circuit 34, obtenu par le deuxième processus logiciel s'exécutant dans le deuxième circuit 34. Conformément à cette transaction établie entre les deux processus logiciels dont les espaces d'adressage physiques sont concernés par l'échange, une mémoire tampon (de l'anglais « buffer ») d'échange est allouée par le système d'exploitation du processeur principal 14, cette mémoire tampon définissant un premier espace d'adressage virtuel à utiliser pour le premier processus logiciel et un deuxième espace d'adressage virtuel à utiliser pour le deuxième processus logiciel dans le premier circuit 12. De même par réciprocité, une mémoire tampon d'échange est également allouée par le système d'exploitation du processeur principal 36 du côté du deuxième circuit 34. En reprenant à titre d'exemple non limitatif une sémantique de type Infiniband, le canal de communication peut être complètement identifié par le quadruplet de données suivantes :
- LID_{SRC} : un paramètre, par exemple codé sur 16 bits, identifiant le premier circuit 12, le système d'exploitation sur lequel s'exécute le premier processus logiciel dans le premier circuit 12 et le premier port d'accès du premier circuit 12,
- KEY_{SRC} : un paramètre, par exemple codé sur 16 bits, identifiant de façon sécurisée la mémoire tampon d'échange définie du côté du premier circuit 12,
- LID_{DEST} : un paramètre, par exemple codé sur 16 bits, identifiant le deuxième circuit 34, le système d'exploitation sur lequel s'exécute le deuxième processus logiciel dans le deuxième circuit 34 et le deuxième port d'accès du deuxième circuit 34,
- KEY_{DEST} : un paramètre, par exemple codé sur 16 bits, identifiant de façon sécurisée la mémoire tampon d'échange définie du côté du deuxième circuit 34.

Ce quadruplet (LID_{SRC}, KEY_{SRC}, LID_{DEST}, KEY_{DEST}) définit de façon unique la transaction établie entre les deux processus logiciels concernés par l'échange de données.

Plus précisément, le couple (LID_{SRC}, KEY_{SRC}) définit le contexte mémoire à utiliser éventuellement du côté du premier circuit 12 pour effectuer les traductions entre adresses virtuelles et adresses physiques et le couple (LID_{DEST}, KEY_{DEST}) définit le contexte mémoire à utiliser du côté du deuxième circuit 34 pour effectuer les traductions entre adresses virtuelles et adresses physiques. Les quatre paramètres sont renseignés au cours de la première étape 100 et conservés en mémoire par les deux circuits 12 et 34. On notera que le protocole mis en oeuvre pour la négociation de ce quadruplet de paramètres est indépendant de la présente invention et peut être choisi librement parmi des protocoles bien connus de l'homme du métier.

Au cours d'une étape suivante de configuration 102 de la phase de création de canal de communication, la MMU 26 du processeur principal 14 du premier circuit 12 est configurée pour réaliser une traduction de l'espace d'adressage virtuel du premier processus logiciel vers son espace d'adressage physique. Cela peut se faire en association avec le canal de communication négocié, c'est-à-dire en association avec le contexte mémoire (LID_{SRC}, KEY_{SRC}), mais en communication directe entre le processeur principal 14 du premier circuit 12 et la mémoire locale 38 du deuxième circuit 34 cela peut aussi se faire autrement, de façon connue en soi, sans avoir besoin de ce contexte mémoire. De même, la IOMMU 52 du deuxième circuit 34 est configurée pour réaliser une traduction de l'espace d'adressage virtuel du deuxième processus logiciel vers son espace d'adressage physique en association avec le canal de communication négocié, c'est-à-dire en association avec le contexte mémoire (LID_{DEST}, KEY_{DEST}). En outre, la MMU 26 du processeur principal 14 du premier circuit 12 est configurée pour réaliser une traduction de l'espace d'adressage virtuel du deuxième processus logiciel vers un espace d'adressage physique temporaire, représentant l'espace d'adressage physique du deuxième processus logiciel vu depuis le premier circuit 12. Enfin, la LUT 32 du premier circuit 12 est configurée pour associer cet espace d'adressage physique temporaire au contexte mémoire (LID_{DEST}, KEY_{DEST}) exploitable par le deuxième circuit 34.

Ensuite, au cours d'une étape 104, le premier processus logiciel émet une requête d'écriture à distance, cette requête désignant une première adresse virtuelle VA_{SRC} d'une donnée à lire dans le premier espace d'adressage virtuel du premier processus logiciel et une deuxième adresse virtuelle VA_{DEST} dans laquelle écrire la donnée lue, cette deuxième adresse virtuelle VA_{DEST} étant incluse dans le deuxième espace d'adressage virtuel du deuxième processus logiciel.

Ces deux adresses virtuelles VA_{SRC} et VA_{DEST} sont codées sur 64 bits.

Au cours d'une étape 106 suivante, l'adresse virtuelle VA_{SRC} est traduite par la MMU 26 en une adresse physique PA_{SRC} de 48 bits. Cette adresse physique PA_{SRC} localise précisément la donnée à lire dans la mémoire locale 16, dans l'espace d'adressage physique alloué au premier processus logiciel par le processeur principal 14.

Ensuite, au cours d'une étape de lecture 108, la donnée à lire dans la mémoire locale 16 est lue.

Au cours d'une étape 110 suivante, l'adresse virtuelle VA_{DEST} est traduite par la MMU 26 en une adresse physique temporaire TPA_{DEST}. Cette adresse physique temporaire TPA_{DEST} est codée sur 48 bits et n'a pas de signification concrète. En revanche, elle comporte une traduction IOVA_{DEST} de la deuxième adresse virtuelle VA_{DEST}, codée sur 32 bits et exploitable par la IOMMU 52 du deuxième circuit 34, un paramètre IKEY_{DEST} codé sur 12 bits, ce paramètre IKEY_{DEST} étant dérivé du paramètre KEY_{DEST} pour indexer la LUT 32, un complément à 0 jusqu'au 47^{e} bit et un bit de poids fort à 1. Elle prend ainsi par exemple la forme suivante :

| | | | | | |
|---|---|---|---|---|---|
| TPA_{DEST}: | 47... 44 | 43 ... 32 | 31 | ... | 0 |
| | 1 0 0 0 | IKEY_{DEST} | IOVA_{DEST} | | |

Le bit de poids fort à 1 indique par exemple que cette adresse physique temporaire indexe la LUT 32.

Au cours d'une étape 112 suivante, un gestionnaire du premier port d'accès du premier circuit 12 (i.e. le système d'exploitation du processeur principal 14) retrouve, à l'aide de la LUT 32 indexée par l'adresse physique temporaire TPA_{DEST}, en particulier par son paramètre IKEY_{DEST}, le couple (LID_{DEST}, KEY_{DEST}) identifiant le contexte mémoire exploitable par le deuxième circuit 34. Il s'en sert pour ajouter les paramètres de ce couple à l'adresse virtuelle IOVA_{DEST} maintenant désignée dans la requête d'écriture à distance.

A titre d'exemple concret, l'adresse physique temporaire TPA_{DEST} est traduite en une adresse de transport TA_{DEST} codée sur 64 bits :

| | | | | | | | | | |
|---|---|---|---|---|---|---|---|---|---|
| TA_{DEST} : | 63 | ... | 48 | 47 | ... | 32 | 31 | ... | 0 |
| | 0 | ... | 0 | KEY_{DEST} | | | IOVA_{DEST} | | |

La requête d'écriture à distance est alors transmise par le gestionnaire du premier port d'accès du premier circuit 12 vers l'interconnexion 56 via l'interface 22 au cours d'une étape de transmission 114. Cette requête comporte l'adresse de transport TA_{DEST} accompagnée du paramètre LID_{DEST}. Elle est routée de façon classique à travers l'interconnexion 56 jusqu'au deuxième circuit 34. Ce routage peut être facilité grâce à des informations spécifiques contenues dans le paramètre LID_{DEST}.

A réception 116 de cette requête par un gestionnaire du deuxième port d'accès du deuxième circuit 34 (i.e. le système d'exploitation ou l'hyperviseur du processeur principal 36), l'adresse de transport TA_{DEST} accompagnée du paramètre LID_{DEST} est traduite par la IOMMU 52 en une adresse physique PA_{DEST} sur 48 bits grâce à l'adresse virtuelle IOVA_{DEST}, incluse dans l'adresse de transport TA_{DEST}, et à au moins une partie des données du contexte mémoire (LID_{DEST}, KEY_{DEST}) dont le paramètre KEY_{DEST} est inclus dans l'adresse de transport TA_{DEST} et dont le paramètre LID_{DEST} accompagne cette adresse de transport. Le gestionnaire du deuxième port d'accès du deuxième circuit 34 n'a donc pas besoin de solliciter le processeur principal 36 pour réaliser cette traduction.

Ensuite, au cours d'une étape d'écriture 118, la donnée lue dans la mémoire locale 16 est écrite dans la mémoire locale 38, à l'adresse physique désignée par PA_{DEST}.

Le trajet des accès en lecture et écriture du procédé de la figure 2A est illustré sur la figure 2B. On remarque que, même si le processeur principal 14 du premier circuit 12 est sollicité pour l'écriture à distance, ce n'est pas le cas du processeur principal 36 du deuxième circuit 34. On remarque en outre qu'aucun adaptateur de réseau particulier n'est sollicité.

On notera qu'il est simple d'adapter le procédé précédemment décrit en une lecture à distance. Il suffit d'émettre une requête de lecture à l'étape 104, puis d'exécuter les étapes 110 à 116 au lieu de l'étape 106, puis de remplacer l'étape 118 par une étape 118' de lecture de donnée à l'adresse physique PA_{DEST} de la mémoire locale 38, puis de transmettre cette donnée lue au premier circuit 12, puis d'exécuter l'étape 106, puis enfin de remplacer l'étape 108 par une étape 108' d'écriture de donnée à l'adresse physique PA_{SRC} de la mémoire locale 16.

On notera également qu'il est simple d'adapter le procédé précédemment décrit pour un échange de données dont la requête serait émise à l'initiative du deuxième processus logiciel du deuxième circuit 34.

Ainsi, par symétrie, au cours de l'étape de configuration 102, la MMU 48 du processeur principal 36 du deuxième circuit 34 peut être configurée pour réaliser une traduction de l'espace d'adressage virtuel du deuxième processus logiciel vers son espace d'adressage physique en association avec le canal de communication négocié, c'est-à-dire en association avec le contexte mémoire (LID_{DEST}, KEY_{DEST}). De même, la IOMMU 30 du premier circuit 12 peut être configurée pour réaliser une traduction de l'espace d'adressage virtuel du premier processus logiciel vers son espace d'adressage physique en association avec le canal de communication négocié, c'est-à-dire en association avec le contexte mémoire (LID_{SRC}, KEY_{SRC}). En outre, la MMU 48 du processeur principal 36 du deuxième circuit 34 peut être configurée pour réaliser une traduction de l'espace d'adressage virtuel du deuxième processus logiciel vers un espace d'adressage physique temporaire, représentant l'espace d'adressage physique du premier processus logiciel vu depuis le deuxième circuit 34. Enfin, la LUT 54 du deuxième circuit 34 peut être configurée pour associer cet espace d'adressage physique temporaire au contexte mémoire (LID_{SRC}, KEY_{SRC}) exploitable par le premier circuit 12. Il suffit ensuite d'adapter les étapes 104 à 118 pour une écriture ou lecture à distance émise depuis le deuxième circuit 34.

Conformément à un deuxième mode de réalisation de l'invention, la figure 3A illustre la mise en oeuvre d'un procédé d'exécution d'une requête d'échange de données dans le contexte suivant :
- une communication indirecte, c'est-à-dire avec sollicitation du contrôleur DMA 20 et de sa IOMMU 28, est établie entre le processeur principal 14 du premier circuit 12 et la mémoire locale 38 du deuxième circuit 34,
- les adresses virtuelles sont codées sur 64 bits et les adresses physiques sur 48 bits,
- le premier processus logiciel émetteur de la requête d'échange de données s'exécute directement sur le système d'exploitation du processeur principal 14, et
- l'échange de données requis est une écriture à distance, c'est-à-dire une lecture de données stockées dans le premier espace d'adressage physique de la mémoire 16 dans lequel s'exécute le premier processus logiciel et une écriture de ces données dans le deuxième espace d'adressage physique de la mémoire 38 dans lequel s'exécute le deuxième processus logiciel.

Dans ce mode de réalisation, la présence du contrôleur DMA 20 et de sa IOMMU 28 est nécessaire. Par symétrie, la présence du contrôleur DMA 42 et de sa IOMMU 50 est également nécessaire si l'on envisage un échange de données dont la requête est émise à l'initiative du deuxième processus logiciel du deuxième circuit 34. Les communications gérées par le contrôleur DMA se font selon le modèle de programmation RDMA, sans qu'il soit nécessaire de détailler le fonctionnement de ce modèle bien connu dans la suite de la description.

La première étape de négociation 200 de la phase de création de canal de communication de ce deuxième mode de réalisation est identique à l'étape 100 précédemment décrite.

Au cours d'une étape suivante de configuration 202 de la phase de création de canal de communication, la IOMMU 28 du contrôleur DMA 20 du premier circuit 12 est configurée pour réaliser une traduction de l'espace d'adressage virtuel du premier processus logiciel vers son espace d'adressage physique en association avec le canal de communication négocié, c'est-à-dire en association avec le contexte mémoire (LID_{SRC}, KEY_{SRC}). De même, la IOMMU 52 du deuxième circuit 34 est configurée pour réaliser une traduction de l'espace d'adressage virtuel du deuxième processus logiciel vers son espace d'adressage physique en association avec le canal de communication négocié, c'est-à-dire en association avec le contexte mémoire (LID_{DEST}, KEY_{DEST}). En outre, la IOMMU 28 du contrôleur DMA 20 du premier circuit 12 est configurée pour réaliser une traduction de l'espace d'adressage virtuel du deuxième processus logiciel vers un espace d'adressage physique temporaire, représentant l'espace d'adressage physique du deuxième processus logiciel vu depuis le premier circuit 12. Enfin, la LUT 32 du premier circuit 12 est configurée pour associer cet espace d'adressage physique temporaire au contexte mémoire (LID_{DEST}, KEY_{DEST}) exploitable par le deuxième circuit 34.

Ensuite, au cours d'une étape 204, le premier processus logiciel émet une requête d'écriture à distance, cette requête désignant une première adresse virtuelle IOVA_{SRC} d'une donnée à lire dans le premier espace d'adressage virtuel du premier processus logiciel et une deuxième adresse virtuelle IOVA_{DEST} dans laquelle écrire la donnée lue, cette deuxième adresse virtuelle IOVA_{DEST} étant incluse dans le deuxième espace d'adressage virtuel du deuxième processus logiciel. Ces deux adresses virtuelles IOVA_{SRC} et IOVA_{DEST}, exploitables par le contrôleur DMA 20 et sa IOMMU 28, sont prises en charge par le contrôleur DMA 20.

Plus précisément, la première adresse virtuelle IOVA_{SRC}, codée sur 32 bits, est encapsulée dans une adresse virtuelle VA_{SRC} plus complète codée sur 64 bits qui comporte en outre le paramètre KEY_{SRC} codé sur 16 bits et un complément à 0 :

| | | | | | | | | | |
|---|---|---|---|---|---|---|---|---|---|
| VA_{SRC} : | 63 | ... | 48 | 47 | ... | 32 | 31 | ... | 0 |
| | 0 | ... | 0 | KEY_{SRC} | | | IOVA_{SRC} | | |

Plus précisément également, la deuxième adresse virtuelle IOVA_{DEST}, codée sur 32 bits, est encapsulée dans une adresse virtuelle VA_{DEST} plus complète codée sur 64 bits qui comporte en outre le paramètre IKEY_{DEST} défini précédemment, et un complément à 0 :

| | | | | | | | | | |
|---|---|---|---|---|---|---|---|---|---|
| VA_{DEST} : | 63 | ... | 44 | 43 | ... | 32 | 31 | ... | 0 |
| | 0 | ... | 0 | IKEY_{DEST} | | | IOVA_{DEST} | | |

Au cours d'une étape 206 suivante, l'adresse virtuelle IOVA_{SRC} est traduite par la IOMMU 28 en l'adresse physique PA_{SRC} définie précédemment grâce au contexte mémoire (LID_{SRC}, KEY_{SRC}) qui est connu du contrôleur DMA 20.

Ensuite, au cours d'une étape de lecture 208, la donnée à lire dans la mémoire locale 16 est lue par le contrôleur DMA 20 sans solliciter le processeur principal 14.

Au cours d'une étape 210 suivante, l'adresse virtuelle VA_{DEST} est traduite par la IOMMU 28 en l'adresse physique temporaire TPA_{DEST} définie précédemment. La traduction consiste dans ce mode de réalisation à simplement à supprimer les 16 bits de poids fort de VA_{DEST} et à mettre le 48^{e} bit à 1.

Les étapes 212 à 218 suivantes sont identiques aux étapes 112 à 118 du mode de réalisation précédent.

Le trajet des accès en lecture et écriture du procédé de la figure 3A est illustré sur la figure 3B. On remarque qu'aucun des processeurs principaux 14 et 36 n'est sollicité. On remarque en outre qu'aucun adaptateur de réseau particulier n'est sollicité.

On notera qu'il est simple, comme dans le premier mode de réalisation, d'adapter le procédé précédemment décrit en une lecture à distance ou pour un échange de données dont la requête serait émise à l'initiative du deuxième processus logiciel du deuxième circuit 34.

Ainsi, par symétrie, au cours de l'étape de configuration 202, la IOMMU 50 du contrôleur DMU 42 du deuxième circuit 34 peut être configurée pour réaliser une traduction de l'espace d'adressage virtuel du deuxième processus logiciel vers son espace d'adressage physique en association avec le canal de communication négocié, c'est-à-dire en association avec le contexte mémoire (LID_{DEST}, KEY_{DEST}). De même, la IOMMU 30 du premier circuit 12 peut être configurée pour réaliser une traduction de l'espace d'adressage virtuel du premier processus logiciel vers son espace d'adressage physique en association avec le canal de communication négocié, c'est-à-dire en association avec le contexte mémoire (LID_{SRC}, KEY_{SRC}). En outre, la IOMMU 50 du contrôleur DMU 42 du deuxième circuit 34 peut être configurée pour réaliser une traduction de l'espace d'adressage virtuel du deuxième processus logiciel vers un espace d'adressage physique temporaire, représentant l'espace d'adressage physique du premier processus logiciel vu depuis le deuxième circuit 34. Enfin, la LUT 54 du deuxième circuit 34 peut être configurée pour associer cet espace d'adressage physique temporaire au contexte mémoire (LID_{SRC}, KEY_{SRC}) exploitable par le premier circuit 12.

Un troisième mode de réalisation de l'invention, également illustré par les figures 3A et 3B, diffère du précédent uniquement en ce que les adresses virtuelles du contrôleur DMA 20 sont codées sur 32 bits (celles du processeur principal 14 pouvant être codées sur 64 ou 32 bits) et les adresses physiques sur 40 bits.

Dans ce cas, au cours de l'étape 204, la première adresse virtuelle IOVA_{SRC} n'est pas codée sur 32 bits mais sur 24 bits seulement. Elle est encapsulée dans l'adresse virtuelle VA_{SRC} plus complète codée sur 32 bits qui comporte en outre une version comprimée CKEY_{SRC} du paramètre KEY_{SRC}, codée sur 8 bits :

| | | | | | | |
|---|---|---|---|---|---|---|
| VA_{SRC} : | 31 | ... | 24 | 23 | ... | 0 |
| | CKEY_{SRC} | | | IOVA_{SRC} | | |

Dans ce cas également, la deuxième adresse virtuelle IOVA_{DEST} est aussi codée sur 24 bits. Elle est encapsulée dans l'adresse virtuelle VA_{DEST} plus complète codée sur 32 bits qui comporte en outre une version comprimée CKEY_{DEST} du paramètre KEY_{DEST}, codée sur 8 bits :

| | | | | | | |
|---|---|---|---|---|---|---|
| VA_{DEST} : | 31 | ... | 24 | 23 | ... | 0 |
| | CKEY_{DEST} | | | IOVA_{DEST} | | |

L'étape 206 est adaptée pour retrouver le paramètre KEY_{SRC} a partir du paramètre comprimé CKEY_{SRC}, à l'aide d'une fonction cache classique, de sorte que l'adresse physique PA_{SRC} codée sur 40 bits peut être retrouvée grâce au contexte mémoire (LID_{SRC}, KEY_{SRC}).

Dans ce cas également, au cours de l'étape 210, l'adresse virtuelle VA_{DEST} codée sur 32 bits est traduite par la IOMMU 28 en une adresse physique temporaire TPA_{DEST} codée sur 40 bits. La traduction consiste dans ce mode de réalisation à retrouver le paramètre IKEY_{DEST} défini précédemment à partir du paramètre comprimé CKEY_{DEST} puis à compléter les 4 derniers bits à « 1 0 0 0 » :

| | | | | | | | |
|---|---|---|---|---|---|---|---|
| TPA_{DEST}: | 39...36 | 35 | ... | 24 | 23 | ... | 0 |
| | 1 0 0 0 | IKEY_{DEST} | | | IOVA_{DEST} | | |

Dans ce cas également, au cours de l'étape 212, l'adresse de transport TA_{DEST}, obtenue par traduction de l'adresse physique temporaire TPA_{DEST} à l'aide de la LUT 32, est codée sur 40 bits :

| | | | | | | |
|---|---|---|---|---|---|---|
| TA_{DEST} : | 39 | ... | 24 | 23 | ... | 0 |
| | KEY_{DEST} | | | IOVA_{DEST} | | |

Dans ce cas également, au cours de l'étape 216, l'adresse PA_{DEST} obtenue par traduction de l'adresse de transport TA_{DEST} à l'aide de la IOMMU 52, est codée sur 40 bits.

Comme le deuxième mode de réalisation, le premier mode de réalisation pourrait lui aussi être adapté à des adresses virtuelles codées sur 32 bits et des adresses physiques sur 40 bits en adaptant ses étapes 100 à 118 conformément à ce qui a été fait pour le troisième mode de réalisation. D'une façon générale, on notera que le codage des adresses virtuelles sur 32 ou 64 bits est relativement standard, le codage sur 64 bits étant largement répandu dans les processeurs. En revanche, le nombre de bits sur lequel peuvent être codées les adresses physiques est nettement plus libre. Il a été choisi, dans les modes de réalisation précédents, de les coder sur 40 ou 48 bits mais d'autres choix auraient pu être faits.

Un quatrième mode de réalisation de l'invention, également illustré par les figures 3A et 3B, diffère du précédent uniquement en ce que les deux processus logiciels concernés par la requête d'échange de données s'exécutent sur des machines virtuelles des processeurs principaux 14 et 36.

Dans ce cas, l'étape 206 est adaptée pour retrouver l'adresse physique PA_{SRC} en deux traductions successives réalisées par la IOMMU 28. Une première traduction, réalisée au niveau de la machine virtuelle qui exécute le premier processus logiciel dans le premier circuit 12, permet de traduire l'adresse virtuelle VA_{SRC} sur 32 bits en une adresse physique intermédiaire IPA_{SRC} sur 40 bits. Une deuxième traduction, réalisée au niveau de l'hyperviseur qui exécute cette machine virtuelle, permet de traduire l'adresse physique intermédiaire IPA_{SRC} en l'adresse physique PA_{SRC} codée sur 40 bits.

Dans ce cas également, l'étape 210 est adaptée pour retrouver l'adresse physique temporaire TPA_{DEST} en deux traductions successives réalisées par la IOMMU 28. Une première traduction, réalisée au niveau de la machine virtuelle qui exécute le premier processus logiciel dans le premier circuit 12, permet de traduire l'adresse virtuelle VA_{DEST} sur 32 bits en une adresse physique temporaire intermédiaire ITPA_{DEST} sur 40 bits dans laquelle le paramètre IKEY_{DEST} a été traduit en un paramètre virtualisé VIKEY_{DEST} :

| | | | | | | | |
|---|---|---|---|---|---|---|---|
| ITPA_{DEST} : | 39...36 | 35 | ... | 24 | 23 | ... | 0 |
| | 1 0 0 0 | VIKEY_{DEST} | | | IOVA_{DEST} | | |

Une deuxième traduction, réalisée au niveau de l'hyperviseur qui exécute cette machine virtuelle, permet de traduire l'adresse physique temporaire intermédiaire ITPA_{DEST} en l'adresse physique temporaire TPA_{DEST}.

Dans ce cas également, l'étape 216 est adaptée pour retrouver l'adresse physique PA_{DEST} en deux traductions successives réalisées par la IOMMU 52. Une première traduction, réalisée au niveau de la machine virtuelle qui exécute le deuxième processus logiciel dans le deuxième circuit 34, permet de traduire l'adresse de transport TA_{DEST} en une adresse physique intermédiaire IPA_{DEST} sur 40 bits. Une deuxième traduction, réalisée au niveau de l'hyperviseur qui exécute cette machine virtuelle, permet de traduire l'adresse physique intermédiaire IPA_{DEST} en l'adresse physique PA_{DEST} codée sur 40 bits.

Dans ce cas également, on notera que le gestionnaire du premier port d'accès du premier circuit 12 est l'hyperviseur du processeur principal 14.

Comme le troisième mode de réalisation, les premier et deuxième modes de réalisation pourraient eux aussi être adaptés à des exécutions de leurs processus logiciels sur des machines virtuelles en adaptant leurs étapes conformément à ce qui a été fait pour le quatrième mode de réalisation.

Il apparaît clairement qu'un procédé d'exécution d'une requête d'échange de données tel que l'un de ceux décrits précédemment permet, par une astuce exécutée aux étapes 112 et 212 décrites précédemment, des écritures ou lectures de données à distance, i.e. d'un circuit sur carte ou puce à l'autre dans un système de circuits interconnectés, sans solliciter le processeur du circuit distant et sans aucun besoin en adaptation réseau.

En outre, il est avantageux de pouvoir tirer profit des unités de gestion mémoire dédiées aux entrées/sorties et des technologies de virtualisation pour mettre en œuvre un procédé selon l'invention.

En outre, dans les modes de réalisation décrits en référence aux figures 3A et 3B, il est avantageux de pouvoir utiliser le modèle de programmation RDMA et par conséquent de bénéficier des bibliothèques logicielles correspondantes et de l'interface de programmation OFED™ (de l'anglais « OpenFabrics Enterprise Distribution ») sur des circuits à faible consommation ne comportant pas de contrôleurs conformes au protocole Infiniband ou RoCE.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué. La présente invention est définie par les revendications indépendantes jointes auxquelles il convient de se référer. Des caractéristiques avantageuses sont exposées dans les revendications dépendantes. Les modes de réalisation ou exemples décrits dans la présente description qui ne sont pas couverts par les revendications sont considérés comme ne faisant pas partie de l'invention.

## Revendications

1. Procédé d'exécution d'une requête d'échange de données entre des premier et deuxième espaces d'adressage physiques disjoints (16, 38) contrôlés respectivement par des premier et deuxième circuits sur carte ou puce distincts (12, 34), comportant les étapes suivantes :
- création (100, 102 ; 200, 202) d'un canal de communication entre :
• un premier port d'accès du premier circuit (12), obtenu par un premier processus logiciel s'exécutant dans le premier circuit qui comporte au moins un processeur (14) d'exécution de ce premier processus logiciel dans le premier espace d'adressage physique (16), et
• un deuxième port d'accès du deuxième circuit (34), obtenu par un deuxième processus logiciel s'exécutant dans le deuxième circuit qui comporte au moins un processeur (36) d'exécution de ce deuxième processus logiciel dans le deuxième espace d'adressage physique (38),
- émission (104 ; 204), par le premier processus logiciel, de ladite requête d'échange de données, cette requête désignant une adresse virtuelle dans un espace d'adressage virtuel du deuxième processus logiciel, et
- exécution (106-118 ; 206-218), par des gestionnaires des premier et deuxième ports d'accès, de la requête d'échange de données entre les espaces d'adressage physiques disjoints (16, 38) des deux processus logiciels, sans sollicitation du processeur (36) exécutant le deuxième processus logiciel,
**caractérisé en ce que** :
- lors de la création (100, 102 ; 200, 202) du canal de communication, une traduction (102 ; 202) de l'espace d'adressage virtuel du deuxième processus logiciel vers son espace d'adressage physique est créée et associée à ce canal de communication dans le deuxième circuit (34), et
- lors de l'exécution (106-118 ; 206-218) de la requête, des données (KEY_{DEST}) d'identification du canal de communication sont ajoutées (112 ; 212) à l'adresse virtuelle désignée dans la requête par l'ajout de quelques bits à l'adresse virtuelle désignée dans la requête pour y insérer ces données d'identification du canal de communication.

2. Procédé d'exécution d'une requête d'échange de données selon la revendication 1, dans lequel la traduction (102 ; 202) de l'espace d'adressage virtuel du deuxième processus logiciel vers son espace d'adressage physique est exploitée par une unité de gestion mémoire (52) du deuxième circuit (34) pour déterminer quelle adresse physique du deuxième espace d'adressage physique (38) correspond à l'adresse virtuelle désignée dans la requête à partir des données (LID_{DEST}, KEY_{DEST}) d'identification du canal de communication ajoutées à cette adresse virtuelle.

3. Procédé d'exécution d'une requête d'échange de données selon la revendication 1 ou 2, dans lequel les données (LID_{DEST}, KEY_{DEST}) d'identification du canal de communication ajoutées à l'adresse virtuelle désignée dans la requête comportent un identifiant (LID_{DEST}) du deuxième circuit (34), d'un système d'exploitation sur lequel s'exécute le deuxième processus logiciel et du deuxième port d'accès obtenu par le deuxième processus logiciel, et un identifiant (KEY_{DEST}) d'une mémoire tampon d'échange définie du côté du deuxième circuit (34).

4. Procédé d'exécution d'une requête d'échange de données selon l'une quelconque des revendications 1 à 3, dans lequel les données (LID_{DEST}, KEY_{DEST}) d'identification du canal de communication sont ajoutées à l'adresse virtuelle désignée dans la requête par le gestionnaire du premier port d'accès du premier circuit (12).

5. Procédé d'exécution d'une requête d'échange de données selon l'une quelconque des revendications 1 à 4, dans lequel l'ajout (112 ; 212) des données (KEY_{DEST}) d'identification du canal de communication à l'adresse virtuelle désignée dans la requête se fait par encapsulation de cette adresse virtuelle avec ces données d'identification du canal de communication dans une adresse de transport (TA_{DEST}), cette adresse de transport étant transmise (114 ; 214) puis traitée (116 ; 216) par le gestionnaire du deuxième port d'accès comme une adresse virtuelle à traduire.

6. Procédé d'exécution d'une requête d'échange de données selon l'une quelconque des revendications 1 à 5, dans lequel l'exécution (106-118) de la requête est gérée par une communication directe établie entre le processeur (14) du premier circuit (12) et une mémoire locale (38) du deuxième circuit (34).

7. Procédé d'exécution d'une requête d'échange de données selon la revendication 6, dans lequel :
- la traduction (106) de l'espace d'adressage virtuel du premier processus logiciel vers son espace d'adressage physique est exploitée par une unité de gestion mémoire (26) du processeur (14) du premier circuit (12), et
- cette unité de gestion mémoire (26) exploite en outre la traduction (110) de l'espace d'adressage virtuel du deuxième processus logiciel vers un espace d'adressage physique temporaire utilisé pour indexer une table de correspondance (32) dans laquelle sont conservées les données (LID_{DEST}, KEY_{DEST}) d'identification du canal de communication.

8. Procédé d'exécution d'une requête d'échange de données selon l'une quelconque des revendications 1 à 5, dans lequel l'exécution (206-218) de la requête est gérée par une communication indirecte établie entre le processeur (14) du premier circuit (12) et une mémoire locale (38) du deuxième circuit (34) avec la sollicitation d'un contrôleur (20) d'accès direct en mémoire pour des accès en écriture et en lecture, en mémoire locale ou à distance, indépendants du processeur (14) du premier circuit (12).

9. Procédé d'exécution d'une requête d'échange de données selon la revendication 8, dans lequel :
- la traduction (206) de l'espace d'adressage virtuel du premier processus logiciel vers son espace d'adressage physique est exploitée par une unité de gestion mémoire (28) associée spécifiquement au contrôleur (20) d'accès direct en mémoire, et
- cette unité de gestion mémoire (28) exploite en outre la traduction (210) de l'espace d'adressage virtuel du deuxième processus logiciel vers un espace d'adressage physique temporaire utilisé pour indexer une table de correspondance (32) dans laquelle sont conservées les données (LID_{DEST}, KEY_{DEST}) d'identification du canal de communication.

10. Procédé d'exécution d'une requête d'échange de données selon l'une quelconque des revendications 1 à 9, dans lequel la requête d'échange de données émise par le premier processus logiciel concerne :
- une lecture de données stockées dans le premier espace d'adressage physique (16) dans lequel s'exécute le premier processus logiciel et une écriture de ces données dans le deuxième espace d'adressage physique (38) dans lequel s'exécute le deuxième processus logiciel, ou
- une lecture de données stockées dans le deuxième espace d'adressage physique (38) dans lequel s'exécute le deuxième processus logiciel et une écriture de ces données dans le premier espace d'adressage physique (16) dans lequel s'exécute le premier processus logiciel.

11. Procédé d'exécution d'une requête d'échange de données selon l'une quelconque des revendications 1 à 10, dans lequel au moins l'un des premier et deuxième processus logiciels s'exécute sur une machine virtuelle exécutée elle-même par un hyperviseur du processeur (14, 36) correspondant, chaque traduction d'adresse virtuelle en adresse physique locale correspondante comportant une traduction d'adresse virtuelle en adresse physique intermédiaire vue par la machine virtuelle et une traduction d'adresse physique intermédiaire en adresse physique vue par l'hyperviseur.

## Patentansprüche

1. Verfahren zum Ausführen einer Datenaustauschanforderung zwischen disjunkten ersten und zweiten physischen Adressräumen (16, 38), die jeweils von getrennten ersten und zweiten Schaltungen (12, 34) auf einer Karte oder einem Chip gesteuert werden, umfassend die folgenden Schritte:
- Erstellen (100, 102; 200, 202) eines Kommunikationskanals zwischen:
• einem ersten Zugangsport der ersten Schaltung (12), der durch einen ersten Softwareprozess erhalten wird, der in der ersten Schaltung läuft, welche mindestens einen Prozessor (14) zum Ausführen dieses ersten Softwareprozesses im ersten physischen Adressraum (16) umfasst, und
• einem zweiten Zugangsport der zweiten Schaltung (34), der durch einen zweiten Softwareprozess erhalten wird, der in der zweiten Schaltung läuft, welche mindestens einen Prozessor (36) zum Ausführen dieses zweiten Softwareprozesses im zweiten physischen Adressraum (38) umfasst,
- Senden (104; 204) der Datenaustauschanforderung durch den ersten Softwareprozess, wobei diese Anforderung eine virtuelle Adresse in einem virtuellen Adressraum des zweiten Softwareprozesses benennt, und
- Ausführen (106-118; 206-218) der Datenaustauschanforderung zwischen den disjunkten physischen Adressräumen (16, 38) der zwei Softwareprozesse durch Verwalter des ersten und zweiten Zugangsports ohne Inanspruchnahme des Prozessors (36), der den zweiten Softwareprozess ausführt,
**dadurch gekennzeichnet, dass**:
- beim Erstellen (100, 102; 200, 202) des Kommunikationskanals in der zweiten Schaltung (34) eine Übersetzung (102; 202) des virtuellen Adressraums des zweiten Softwareprozesses in dessen physischen Adressraum erstellt und mit diesem Kommunikationskanal verknüpft wird, und
- beim Ausführen (106-118; 206-218) der Anforderung Daten (KEY_{DEST}) zum Identifizieren des Kommunikationskanals zu der in der Anforderung benannten virtuelle Adresse hinzugefügt (112; 212) werden durch Hinzufügen einiger Bits zu der in der Anforderung benannten virtuellen Adresse, um dort diese Daten zum Identifizieren des Kommunikationskanals einzufügen.

2. Verfahren zum Ausführen einer Datenaustauschanforderung nach Anspruch 1, wobei die Übersetzung (102; 202) des virtuellen Adressraums des zweiten Softwareprozesses in dessen physischen Adressraum von einer Speicherverwaltungseinheit (52) der zweiten Schaltung (34) genutzt wird, um auf Grundlage der Daten (LID_{DEST}, KEY_{DEST}) zum Identifizieren des Kommunikationskanals, die zu dieser virtuellen Adresse hinzugefügt wurden, zu bestimmen, welche physische Adresse des zweiten physischen Adressraums (38) der in der Anforderung benannten virtuellen Adresse entspricht.

3. Verfahren zum Ausführen einer Datenaustauschanforderung nach Anspruch 1 oder 2, wobei die Daten (LID_{DEST}, KEY_{DEST}) zum Identifizieren des Kommunikationskanals, die zu der in der Anforderung benannten virtuellen Adresse hinzugefügt werden, einen Identifikator (LID_{DEST}) der zweiten Schaltung (34), eines Betriebssystems, auf dem der zweite Softwareprozess läuft, und des zweiten Zugangsports, der durch den zweiten Softwareprozess erhalten wird, und einen Identifikator (KEY_{DEST}) eines Austausch-Pufferspeichers umfassen, der auf Seite der zweiten Schaltung (34) definiert wird.

4. Verfahren zum Ausführen einer Datenaustauschanforderung nach einem der Ansprüche 1 bis 3, wobei die Daten (LID_{DEST}, KEY_{DEST}) zum Identifizieren des Kommunikationskanals vom Verwalter des ersten Zugangsports der ersten Schaltung (12) zu der in der Anforderung benannten virtuellen Adresse hinzugefügt werden.

5. Verfahren zum Ausführen einer Datenaustauschanforderung nach einem der Ansprüche 1 bis 4, wobei das Hinzufügen (112; 212) der Daten (KEY_{DEST}) zum Identifizieren des Kommunikationskanals zu der in der Anforderung benannten virtuelle Adresse durch Kapseln dieser virtuellen Adresse mit diesen Daten zum Identifizieren des Kommunikationskanals in einer Transportadresse (TA_{DEST}) erfolgt, wobei diese Transportadresse vom Verwalter des zweiten Zugangsports als eine zu übersetzende virtuelle Adresse übertragen (114; 214) und anschließend verarbeitet (116; 216) wird.

6. Verfahren zum Ausführen einer Datenaustauschanforderung nach einem der Ansprüche 1 bis 5, wobei das Ausführen (106-118) der Anforderung über eine direkte Kommunikation verwaltet wird, die zwischen dem Prozessor (14) der ersten Schaltung (12) und einem lokalen Speicher (38) der zweiten Schaltung (34) aufgebaut wird.

7. Verfahren zum Ausführen einer Datenaustauschanforderung nach Anspruch 6, wobei:
- die Übersetzung (106) des virtuellen Adressraums des ersten Softwareprozesses in dessen physischen Adressraum von einer Speicherverwaltungseinheit (26) des Prozessors (14) der ersten Schaltung (12) genutzt wird, und
- diese Speicherverwaltungseinheit (26) des Weiteren die Übersetzung (110) des virtuellen Adressraums des zweiten Softwareprozesses in einen temporären physischen Adressraum nutzt, der verwendet wird, um eine Entsprechungstabelle (32) zu indizieren, in der die Daten (LID_{DEST}, KEY_{DEST}) zum Identifizieren des Kommunikationskanals aufbewahrt werden.

8. Verfahren zum Ausführen einer Datenaustauschanforderung nach einem der Ansprüche 1 bis 5, wobei das Ausführen (206-218) der Anforderung über eine indirekte Kommunikation verwaltet wird, die zwischen dem Prozessor (14) der ersten Schaltung (12) und einem lokalen Speicher (38) der zweiten Schaltung (34) mit der Inanspruchnahme einer Direktspeicherzugriffssteuerung (20) für lokale oder ferne Schreib- und Lese-Speicherzugriffe aufgebaut wird, die vom Prozessor (14) der ersten Schaltung (12) unabhängig sind.

9. Verfahren zum Ausführen einer Datenaustauchanforderung nach Anspruch 8, wobei:
- die Übersetzung (206) des virtuellen Adressraums des ersten Softwareprozesses in dessen physischen Adressraum von einer Speicherverwaltungseinheit (28) genutzt wird, die speziell mit der Direktspeicherzugriffssteuerung (20) verknüpft ist, und
- diese Speicherverwaltungseinheit (28) des Weiteren die Übersetzung (210) des virtuellen Adressraums des zweiten Softwareprozesses in einen temporären physischen Adressraum nutzt, der verwendet wird, um eine Entsprechungstabelle (32) zu indizieren, in der die Daten (LID_{DEST}, KEY_{DEST}) zum Identifizieren des Kommunikationskanals aufbewahrt werden.

10. Verfahren zum Ausführen einer Datenaustauschanforderung nach einem der Ansprüche 1 bis 9, wobei die vom ersten Softwareprozess gesendete Datenaustauschanforderung betrifft:
- ein Lesen von Daten, die im ersten physischen Adressraum (16) gespeichert sind, in dem der erste Softwareprozess läuft, und ein Schreiben dieser Daten in den zweiten physischen Adressraum (38), in dem der zweite Softwareprozess läuft, oder
- ein Lesen von Daten, die im zweiten physischen Adressraum (38) gespeichert sind, in dem der zweite Softwareprozess läuft, und ein Schreiben dieser Daten in den ersten physischen Adressraum (16), in dem der erste Softwareprozess läuft.

11. Verfahren zum Ausführen einer Datenaustauschanforderung nach einem der Ansprüche 1 bis 10, wobei mindestens einer aus dem ersten und zweiten Softwareprozess auf einer virtuellen Maschine läuft, die ihrerseits von einem Hypervisor des entsprechenden Prozessors (14, 36) ausgeführt wird, wobei jede Übersetzung einer virtuellen Adresse in eine entsprechende lokale physische Adresse eine Übersetzung einer virtuellen Adresse in eine physische Zwischenadresse, die von der virtuellen Maschine gesehen wird, und eine Übersetzung der physischen Zwischenadresse in eine physische Adresse umfasst, die vom Hypervisor gesehen wird.

## Claims

1. A method for executing a request to exchange data between first and second disjoint physical addressing spaces (16, 38) respectively controlled by first and second separate chip or card circuits (12, 34), comprising the following steps:
- creation (100, 102; 200, 202) of a communication channel between:
• a first access port of the first circuit (12), obtained by a first software process that executes in the first circuit that comprises at least one processor (14) for executing this first software process in the first physical addressing space (16), and
• a second access port of the second circuit (34), obtained by a second software process that executes in the second circuit that comprises at least one processor (36) for executing this second software process in the second physical addressing space (38),
- sending (104; 204), by the first software process, of said request to exchange data, wherein this request designates a virtual address in a virtual addressing space of the second software process, and
- executing (106-118; 206-218), by managers of the first and second access ports, of the request to exchange data between the disjoint physical addressing spaces (16, 38) of the two software processes, without invoking the processor (36) executing the second software process,
**characterized in that**:
- during the creation (100, 102; 200, 202) of the communication channel, a translation (102; 202) of the virtual addressing space of the second software process into its physical addressing space is created and associated to this communication channel in the second circuit (34), and
- during the execution (106-118; 206-218) of the request, data (KEY_{DEST}) for identification of the communication channel is added (112; 212) to the virtual address designated in the request by adding a few bits to the virtual address designated in the request in order to insert this data therein for identification of the communication channel.

2. The method for executing a request to exchange data as claimed in claim 1, wherein the translation (102; 202) of the virtual addressing space of the second software process into its physical addressing space is used by a memory management unit (52) of the second circuit (34) in order to determine which physical address of the second physical addressing space (38) corresponds to the virtual address designated in the request using the data (LID_{DEST}, KEY_{DEST}) for identification of the communication channel added to this virtual address.

3. The method for executing a request to exchange data as claimed in claim 1 or 2, wherein the data (LID_{DEST}, KEY_{DEST}) for identification of the communication channel added to the virtual address designated in the request comprises an identifier (LID_{DEST}) of the second circuit (34), of an operating system whereon the second software process is executed and of the second access port obtained by the second software process, and an identifier (KEY_{DEST}) of an exchange buffer memory defined on the side of the second circuit (34).

4. The method for executing a request to exchange data as claimed in any of claims 1 to 3, wherein the data (LID_{DEST}, KEY_{DEST}) for identification of the communication channel is added to the virtual address designated in the request by the manager of the first access port of the first circuit (12).

5. The method for executing a request to exchange data as claimed in any of claims 1 to 4, wherein the adding (112; 212) of data (KEY_{DEST}) for identification of the communication channel to the virtual address designated in the request is carried out through encapsulation of this virtual address with this data for identification of the communication channel in a transport address (TA_{DEST}), with this transport address being sent (114; 214) then processed (116; 216) by the manager of the second access port as a virtual address to be translated.

6. The method for executing a request to exchange data as claimed in any of claims 1 to 5, wherein the execution (106-118) of the request is managed by direct communication established between the processor (14) of the first circuit (12) and a local memory (38) of the second circuit (34).

7. The method for executing a request to exchange data according to claim 6, wherein:
- the translation (106) of the virtual addressing space of the first software process into its physical addressing space is used by a memory management unit (26) of the processor (14) of the first circuit (12), and
- this memory management unit (26) further makes use of the translation (110) of the virtual addressing space of the second software process into a temporary physical addressing space used to index a look-up table (32) wherein the data (LID_{DEST}, KEY_{DEST}) for identification of the communication channel is stored.

8. The method for executing a request to exchange data as claimed in any of claims 1 to 5, wherein the execution (206-218) of the request is managed by an indirect communication established between the processor (14) of the first circuit (12) and a local memory (38) of the second circuit (34) with the invoking of a direct memory access controller (20) for read and write access, in local memory or remotely, independent of the processor (14) of the first circuit (12).

9. The method for executing a request to exchange data as claimed in claim 8, wherein:
- The translation (206) of the virtual addressing space of the first software process into its physical addressing space is used by a memory management unit (28) associated specifically with the direct memory access controller (20), and
- this memory management unit (28) further makes use of the translation (210) of the virtual addressing space of the second software process into a temporary physical addressing space used to index a look-up table (32) wherein the data (LID_{DEST}, KEY_{DEST}) for identification of the communication channel is stored.

10. The method for executing a request to exchange data as claimed in any of claims 1 to 9, wherein the request to exchange data sent by the first software process concerns:
- a reading of the data stored in the first physical addressing space (16) wherein the first software process is executed and a writing of this data in the second physical addressing space (38) wherein the second software process is executed, or
- a reading of the data stored in the second physical addressing space (38) wherein the second software process is executed and a writing of this data in the first physical addressing space (16) wherein the first software process is executed.

11. The method for executing a request to exchange data as claimed in any of claims 1 to 10, wherein at least one of the first and second software processes is executed on a virtual machine which is itself executed by a hypervisor of the corresponding processor (14, 36), with each translation of a virtual address into a corresponding local physical address comprising a translation of the virtual address into an intermediate physical address as viewed by the virtual machine and a translation of the intermediate physical address into a physical address as seen by the hypervisor.
